# EUROPEAN PATENT APPLICATION

(11) **EP 4 095 477 A1**
(43) Date of publication of application: **30.11.2022**
(21) Application number: 21175515.2
(22) Date of filing: 24.05.2021
(51) Int. Cl.: F28F 9/02

(54) **HEAT EXCHANGER**

(71) Applicant: Valeo Autosystemy SP. Z.O.O., 32-050 Skawina (PL)
(72) Inventor: BELZOWSKI, Michal, 32 050 Skawina (PL); SZOSTEK, Dawid, 32 050 Skawina (PL)
(74) Representative: Valeo Systèmes Thermiques

(57) **Abstract**

The present invention discloses a heat exchanger for exchanging heat between a first fluid and a second fluid. The heat exchanger comprises a plurality of heat exchange tubes fluidically connecting a first manifold and a second manifold for a first fluid flow there between. The first fluid flows between the manifolds through the tubes and a second fluid flows around the heat exchange tubes. At least one heater module disposed between two of the heat exchange tubes and in contact with the second fluid. One or more electrical terminals of the heater module is adapted to protrude outward from at least one of the manifolds.

## Description

The present invention generally relates to a heat exchanger, more particularly to a heat exchanger integrated with heater modules.

Thermal management system is critical for the operation and design of the battery system. Particularly, vehicles such as battery-electric vehicles, plugin electric vehicles, or hybrid-electric vehicles, the battery system is an energy source of the vehicle. The battery system have a narrow operating temperature range and must be maintained within that specified operating temperature. In cold conditions, the battery system needs to be warmed to reach the optimum temperature and during hot conditions, the battery system needs to be cooled to reach the optimum temperature. Deviation of battery system from optimum temperature can reduce battery charge efficiency and impede battery performance. Sometimes, the batteries can be permanently damaged or destroyed, while operation in undesirable temperature can even result in fires and other safety related events.

Typical thermal management systems rely on a number of subsystems to cool and heat the battery system. The subsystems may include a battery loop having a chiller, air-to-fluid heat exchanger and electric heater. The chiller or air-to-fluid heat exchanger are adapted for cooling the heat exchange fluid such as refrigerant in the battery loop to cool the battery system and the electric heater is adapted for heating the fluid in the battery loop to increase the temperature of the battery system. The subsystems may further include a valve that selectively couples the refrigerant from the heater module to the battery pack to increase the temperature of the battery pack, or couples the refrigerant from the chiller/ air-to-fluid exchanger to the battery pack to remove the heat. However, employing multiple independent subsystems makes packaging of loop more complicated and could generate additional pressure drop in the loop.

In addition to battery thermal management, the thermal management system also require to alternatively warm or cool the passenger compartment as desirable for passenger comfort. Again, for passenger compartment or cabin, multiple heating device and cooling device are required. Such an approach is inherently inefficient, as each thermal management subsystem requires its own components, for example, pumps, valves, refrigerant systems, etc.

Accordingly, there remains a need for a heat exchanger adapted to cool or warm the heat transfer fluid for heat exchange with the vehicle subsystems.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of forgoing, the present invention discloses a heat exchanger for heat exchange between a first fluid and a second fluid. The heat exchanger comprises a plurality of heat exchange tubes fluidically connecting a first manifold and a second manifold for a first fluid flow there-between. The first fluid flows between the manifolds through the tubes. A second fluid flows around the heat exchange tubes. The heat exchanger further comprises at least one heater module disposed between two of the heat exchange tubes and in contact with the second fluid. Further, one or more electrical terminals of the heater module is adapted to protrude outward from at least one of the manifolds.

In one embodiment, one or more electrical terminals includes a first electrical terminal and a second electrical terminal, and at least one heating element connecting the electrical terminals. The heating element being disposed along and parallel to the heat exchange tubes.

In one embodiment, the first electrical terminal protrudes out through the first manifold and the second electrical terminal protrudes out through the second manifold.

In another embodiment, at least one electrical terminal protrudes out through at least one manifold and extends beyond the cover member of the at least one manifold.

In one embodiment, the heating element comprises a first portion connected to the first electrical terminal and a second portion connected to the second electrical terminal. The first portion and the second portion are connected to each other at distal ends thereof to form a u -shaped heating element, The first electrical terminal and the second electrical terminal protrude out from either one of the first manifold and the second manifold. The first electrical terminal is insulated from the second electrical terminal.

The heat exchanger further comprises a plurality of fins. The fin is disposed on both sides of the heat exchange tubes. The plurality of heat exchange tubes are divided into a first set of tubes and a second set of tubes. The first set of tubes is fluidically connected to the second set of tubes through the second manifold. The first manifold includes an inlet manifold and an outlet manifold in communication with the first fluid flow. The first fluid flows through the first set of tubes from the inlet manifold toward the second manifold, and then reverses the direction of flow through the second set of heat exchange tubes to reach the outlet manifold, whereby providing at least one U-turn for flow of the first fluid.

The heat exchanger further comprises a connector disposed on a housing enclosing a heat exchanger core. The heat exchange tubes extending between the manifolds, fins and heater modules together constitutes the heat exchanger core. The housing includes a second inlet and a second outlet. The second fluid flows from the second inlet, circulates around the heat exchanger tubes, heater modules and through the fins, and reaches the second outlet.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 exemplarily illustrates a perspective view of a heat exchanger according to an embodiment of the present invention;
FIG. 2 exemplarily illustrates a perspective view of the heat exchanger of FIG. 1 without a housing;
FIG. 3 exemplarily illustrates a side view of the heat exchanger of FIG. 2 without the housing;
FIG. 4 exemplarily illustrates a cross sectional view of the heater module;
FIG. 5 exemplarily illustrates the heater module piercing through the header plate of the manifold of the heat exchanger of FIG. 1;
FIG. 6 exemplarily illustrates a cross sectional view of the heater exchanger along the line A-A of FIG. 5, where the electrical terminal pierces and extend beyond the manifolds;

It must be noted that the figures disclose the invention in a detailed enough way to be implemented, said figures helping to better define the invention if needs be. The invention should however not be limited to the embodiment disclosed in the description.

The present invention discloses a heat exchanger for exchanging heat between a first fluid and a second fluid. The heat exchanger comprises a plurality of heat exchange tubes fluidically connecting a first manifold and a second manifold for a first fluid flow there between. The first fluid flows between the manifolds through the tubes and a second fluid flows around the heat exchange tubes. At least one heater module disposed between two of the heat exchange tubes and in contact with the second fluid. One or more electrical terminals of the heater module is adapted to protrude outward from at least one of the manifolds. Here, the first fluid could be refrigerant and the second fluid could be coolant. In an aspect, the heat exchanger functions as a chiller, where the heat exchanger is adapted to cool the refrigerant having high temperature using the coolant having low temperature. In another aspect, the heat exchanger functions as an electric heater, where the temperature of the refrigerant could be increased using the heater modules with minimal flow of coolant or without the coolant flow. In yet another aspect, the heat exchanger is adapted to increase the temperature of the coolant using the heater modules. The heater modules in thermal contact with the coolant are energized to generate thermal energy, which is transferred to the coolant. In another aspect, in heat pump mode, the heat exchanger is adapted to increase the temperature of the refrigerant having low temperature using the coolant having high temperature.

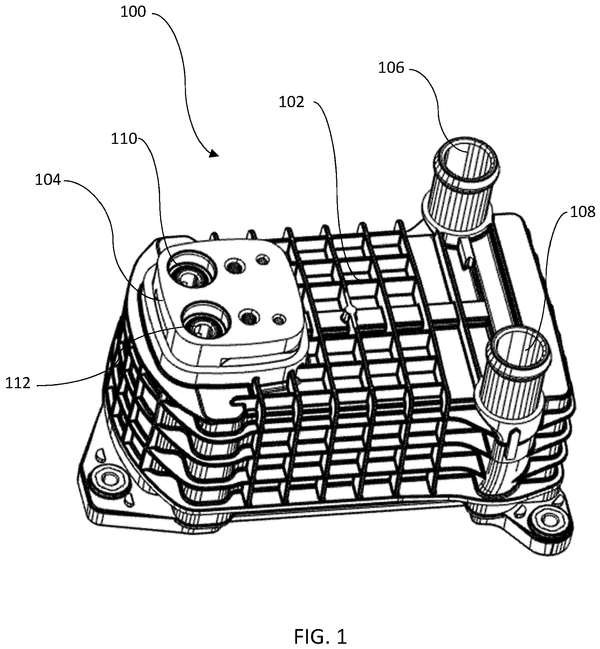

Fig. 1 illustrates a perspective view of a heat exchanger 100 according to an embodiment of the present invention. The heat exchanger 100 comprises a housing 102 and a connector 104 disposed over the housing 102. The connector 104 includes a first inlet 110 and a first outlet 112 adapted to connect with a first fluid circuit supplying a first fluid. The housing 102 includes a second inlet 106 and a second outlet 108 adapted to connect with a second fluid circuit supplying a second fluid. In one embodiment, the first fluid is a refrigerant and the second fluid is a coolant.

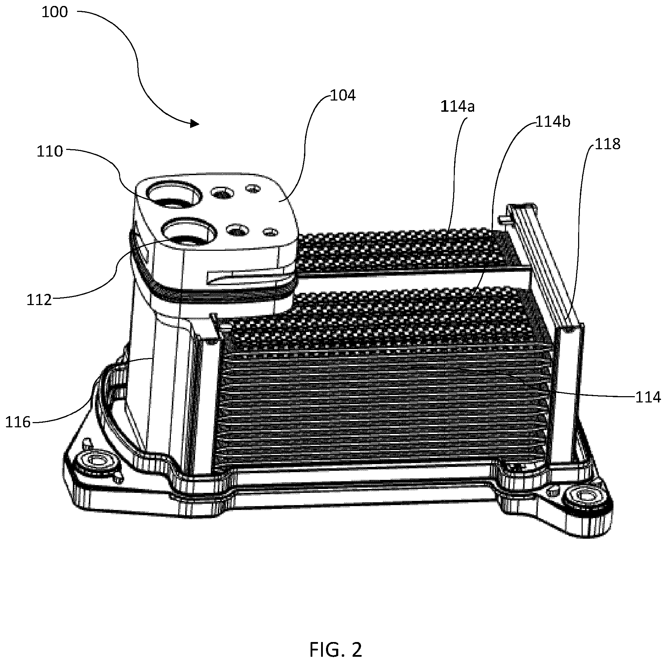

Referring to FIG. 2, the heat exchanger 100 comprises a heat exchanger core 128. The heat exchanger core 128 includes a first manifold 116, a second manifold 118 and a plurality of heat exchange tubes 114 extending between the first manifold 116 and the second manifold 118. The first manifold 116 includes an inlet manifold and an outlet manifold in fluid communication with the first inlet 110 and the first outlet 112 of the connector 104, respectively. The plurality of heat exchange tubes 114 includes a first end and an opposing second end. The first end of the heat exchange tubes 114 are received into corresponding tube holes of the header plate of the first manifold 116. The opposing second end of the heat exchange tubes 114 are received into the corresponding tube holes of the header plate of the second manifold 118.

Still, referring to FIG. 2, the plurality of heat exchange tubes 114 includes a first set of tubes 114a and a second set of tubes 114b for facilitating flow of the first fluid. The first set of tubes 114a and the second set of tubes 114b are arranged in at least two parallel stacks. The first set of tubes 114a is fluidically connected to the second set of tubes 114b through the second manifold 118 providing at least one U-turn for flow of the first fluid. Precisely, the first fluid flows through the first set of tubes 114a extending from the inlet manifold toward the second manifold 118, and then reverses the direction of flow through the second set of tubes 114b to reach the outlet manifold, which defines a first fluid path. The second fluid flows around the heat exchange tubes 114 from the second inlet 106 and reaches the second outlet 108, which defines a second fluid path.

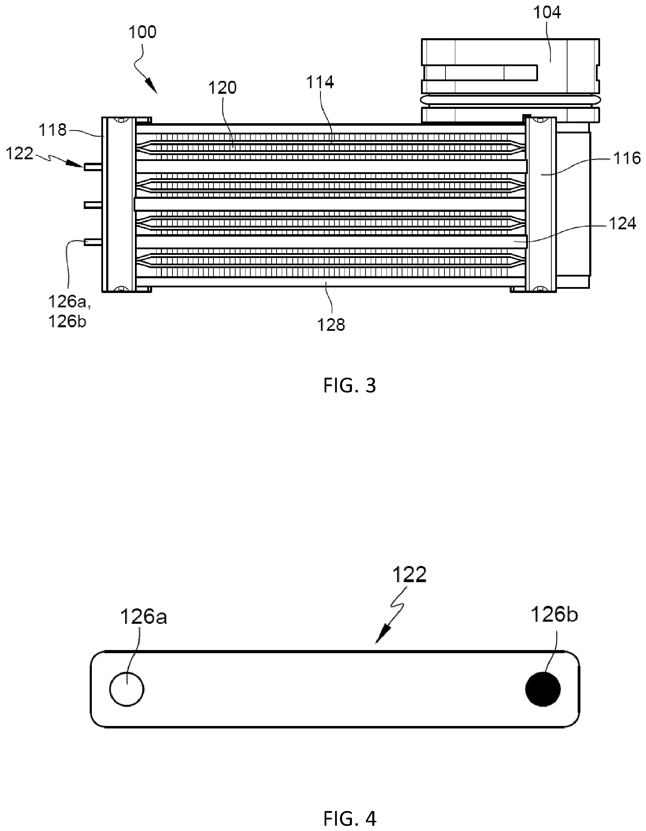

Referring to FIG. 3, the heat exchanger core 128 further comprises a plurality of heater modules 122. The heater modules 122 are disposed such that at least one heater module 122 is between two adjacent heat exchange tubes 114 and in contact with the second fluid. The heater module 122 extend in parallel along the entire length of the heat exchange tubes 114, which pierce and extend beyond at least one of the manifolds. In another embodiment, the heater module 122 extend in parallel along the entire length of the heat exchange tubes 114, in which a first end of the heater module 122 pierce and extend beyond the first manifold 116 and an opposing second end of the heater module 122 pierce and extend beyond the second manifold 118.

The heater module 122 further comprises a plurality of thermally conductive fins 120, hereinafter referred as fins 120. The plurality of fins 120are arranged in such a way that at least one fin 120 is disposed between adjacent heat exchange tube 114 and heater module 122. Each of the fins 120 extend along the entire length of the adjacent heat exchange tube 114 and heater module 122. The fins 120 are thermally coupled to the heat exchange tube 114 and heater module 122. The fins 120 are heated in response to a voltage source applied to the heater module 122, which in turn heats the heat exchange tubes 114. The amount of heating of the fin 120 and the heat exchange tube 114 is dependent on a voltage output of the voltage source.

Continuing to refer to FIG. 3, the fins 120 and the heater modules 122 are in contact with the second fluid, which is in heat exchange configuration with the first fluid flowing within the heat exchange tubes 114. This configuration allows the heater module 122 to increase the temperature of the second fluid by transfer of heat from the heater module 122 to across the fin 120, which in turn increases the temperature of the second fluid flowing across the fin 120. In another embodiment, the heater module 122 is adapted to heat the first fluid by transfer of heat from the fin 120 to the heat exchanges tube 114 without or with second fluid flow.

Referring to FIG. 3 and FIG. 4, the heater module 122 comprises one or more electrical terminals (126a, 126b) and at least one heating element 124. One or more electrical terminal (126a, 126b) includes a first terminal 126a and a second terminal 126b. The electrical terminals (126a, 126b) are isolated from one another by isolation layer composed of isolation material. The heating element 124 extend in parallel along the entire length of the heat exchange tube 114, from where the electrical terminals 126a, 126b pierce and extend beyond at least one of the manifolds (116, 118) as shown in FIG. 3. Further, in FIG. 3, terminals (126a, 126) are hidden because of the provided view of the drawing, and could be read with FIG. 4 where the terminals (126a, 126b) are shown clearly. In another embodiment, the heating element 124 extend in parallel along the entire length of the heat exchange tubes 114, in which the first terminal 126a from a first end of the heater module 122 pierce and extend beyond the first manifold 116, and the second terminal 118 from an opposing second end of the heater module 122 pierce and extend beyond the second manifold 118. In this embodiment, the heater module 122 is provided in the form of flat tubes. In yet another embodiment, the heating element 124 includes a first portion and a second portion. The first portion and the second portion extends parallel along the entire length of the heat exchange tubes 114 and are joined at their distal ends forming a U-shaped configuration having two open ends. The electrical terminals from the proximal ends or the two open ends of the heater module 122 pierce and extend beyond at least one of the manifolds (116, 118).

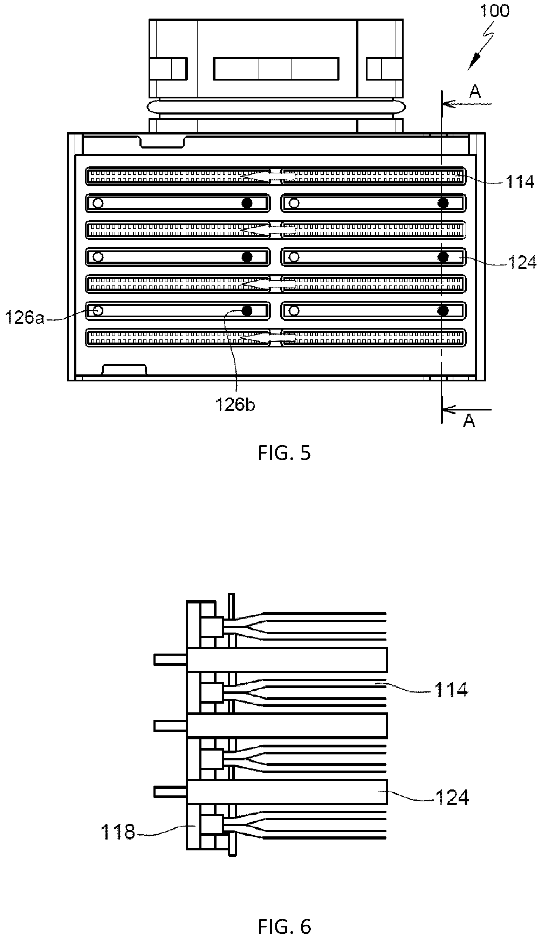

Referring to FIG. 5 and FIG. 6, the electrical terminals (126a, 126b) pierces and extends beyond at least one manifold 118. Further illustrates, the heating elements 124 extending along the entire length of the heat exchange tubes 114 and fins 120. This configuration ensures that the heater module 122 is in contact with the heat exchange tubes 114 and fins 120 along the entire length without leaving any dead zones. Thereby, whole length of the heat exchange tubes 114 extending between the manifolds (116, 118) for first fluid flow, the fins 120 and the heater modules 122 across the second fluid flow is in heat exchange relation, providing an effective heat exchange configuration. The operation of the heat exchanger 100 integrated with heater modules 122 are detailed as follows.

In first mode of operation, the heat exchanger 100 is adapted to function as a chiller for cooling a vehicle subsystem, for example, a battery system. The first fluid, herein after interchangeably referred as refrigerant, is provided through the first inlet 110 to the inlet manifold. The refrigerant is adapted to pass through the first set of heat exchange tubes 114a to the second manifold 118. From the second manifold 118 the refrigerant pass through the second set of heat exchange tubes 114b to the outlet manifold. The second fluid, herein after interchangeably referred as coolant, is provided through the second inlet 106. The refrigerant flowing through the heat exchange tubes 114 has higher temperature and the coolant flowing around the heat exchange tubes 114 has lower temperature. The coolant absorbs heat from the refrigerant, from where the refrigerant is returned to a refrigerant circuit for cooling the battery system.

In second mode of operation, during heat pump mode, the refrigerant flows through the heat exchange tubes 114 have lower temperature and the coolant flows around the heat exchange tubes 114 have higher temperature. The refrigerant absorbs heat from the coolant, from where the refrigerant is returned to a refrigerant circuit and the coolant is returned to a coolant circuit for increasing heat exchange with of vehicle subsystem.

In third mode of operation, the heater exchanger 100 is adapted to function as an electric heater for refrigerant. The refrigerant is provided to pass through the heat exchange tubes 114 and the coolant is provided to pass around the heat exchange tubes 114. Further, the heater modules 122 are energized to generate heat by applying electric source voltage of the vehicle across the terminals (126a, 126b). The generated heat increases the temperature of the refrigerant. The warmed refrigerant is returned to a refrigerant circuit via the first outlet 112 to the vehicle subsystem, for example, battery system. In another embodiment, the warmed refrigerant could be returned to the evaporator to remove the frost/ice from the evaporator surface. In this embodiment, minimal amount of coolant flow is provided to pass through the second fluid flow path. In an alternative, no coolant flow is provided to the heat exchanger 100 and the heating of refrigerant is realized by conduction of heat from heating element 124 to the heat exchange tubes 114 through the fins 120.

In fourth mode of operation, the heat exchanger 100 is adapted to function as an electric heater. The electric heater could be adapted to increase the temperature of the coolant with minimal or without refrigerant flow. The heater modules 122 are energized to generate heat by applying electric source voltage of the vehicle across the terminals (126a, 126b). The generated heat increases the temperature of the coolant. The warmed coolant is returned to a coolant circuit for increasing the temperature of the vehicle subsystem. In another aspect, the electric heater could be adapted to increase the temperature of the refrigerant with minimal or without coolant flow and the warmed refrigerant could increase the temperature of the vehicle subsystem by circulation via a refrigerant circuit. Accordingly, the heat exchanger 100 integrated with heater modules 122 is adapted to cool or warm the heat transfer fluid for heat exchange with the vehicle subsystems.

In any case, the invention cannot and should not be limited to the embodiments specifically described in this document, as other embodiments might exist. The invention shall spread to any equivalent means and any technically operating combination of means.

## Claims

1. A heat exchanger (100) for exchanging heat between a first fluid and a second fluid, comprising:
a plurality of heat exchange tubes (114) fluidically connecting a first manifold (116) and a second manifold (118) for a first fluid flow there-between, wherein the first fluid flows between the manifolds (116, 118) through the tubes (114), and a second fluid flows around the heat exchange tubes (114); and
at least one heater module (122) disposed between two of the heat exchange tubes (114) and in contact with the second fluid,
wherein one or more electrical terminals (126a, 126b) of the heater module (122) is adapted to protrude outward from at least one of the manifolds (116, 118).

2. The heat exchanger (100) as claimed in claim 1, wherein each manifold (116, 118) includes a cover member and a header plate that includes slots therein for receiving the heat exchange tubes (114) of the heat exchanger (100) there through.

3. The heat exchanger (100) as claimed in any of the preceding claims, further comprises plurality of fins (120), the fin (120) is disposed on both sides of the heat exchanger tubes (114).

4. The heat exchanger (100) as claimed in any of the preceding claims, wherein the first manifold (116) includes an inlet manifold and an outlet manifold for the first fluid flow.

5. The heat exchanger (100) as claimed in any of the preceding claims, further comprises a connector (104) disposed on a housing (102) enclosing a heat exchanger core (128), wherein the heat exchange tubes (114) extending between the manifolds (116, 118), the fins (120) and the heater modules (122) together defines the heat exchanger core (128).

6. The heat exchanger (100) as claimed in any of the preceding claims, wherein the connector (104) comprises a first inlet (110) in fluid communication with the inlet manifold and a first outlet (112) in fluid communication with the outlet manifold.

7. The heat exchanger (100) as claimed in any of the preceding claims, wherein the housing (102) includes a second inlet (106) and a second outlet (108) for the second fluid flow.

8. The heat exchanger (100) as claimed in any of the preceding claims, wherein the plurality of heat exchange tubes (114) are divided into a first set of tubes (114a) and a second set of tubes (114b).

9. The heat exchanger (100) as claimed in any of the preceding claims, wherein the first set of tubes (114a) and the second set of tubes (114b) are arranged in at least two parallel stacks.

10. The heat exchanger (100) as claimed in any of the preceding claims, wherein the first set of tubes (114a) is fluidically connected to the second set of tubes (114b) through the second manifold (118) providing at least one U-turn for flow of the first fluid.

11. The heat exchanger (100) as claimed in any of the preceding claims, wherein the heater module (122) comprises one or more electrical terminals (126a, 126b) including a first electrical terminal (126a) and a second electrical terminal (126b), and at least one heating element (124) connecting the electrical terminals (126a, 126b), the heating element (124) being disposed along and parallel to the heat exchange tubes (114).

12. The heat exchanger (100) as claimed any of the preceding claims, wherein the heating element (124) comprises :
• a first portion connected to the first electrical terminal (126a); and
• a second portion connected to the second electrical terminal (126b),
the first electrical terminal (126a) and the second electrical terminal (126b) protrude out from either one of the first manifold (116) and the second manifold (118), the first portion and the second portion are connected to each other at distal ends thereof to form a U-shaped configuration, the first electrical terminal (126a) is insulated from the second electrical terminal (126b).

13. The heat exchanger (100) as claimed in claim 1 to 10, wherein the first electrical terminal (126a) protrudes out through the first manifold (116) and the second electrical terminal (126b) protrudes out through the second manifold (118).

14. The heat exchanger (100) as claimed in claim 1 to 10, wherein at least one of the electrical terminals (126a,126b) protrudes out through at least one manifold (116, 118), and extends beyond the cover member of the at least one manifold (116, 118).
